# FASCICULE DE BREVET EUROPEEN

(11) **EP 2 103 184 B1**
(45) Date de publication et mention de la délivrance du brevet: **05.04.2017**
(21) Numéro de dépôt: 07858571.8
(22) Date de dépôt: 15.10.2007
(51) Int. Cl.: H05B 3/60, B01J 8/12

(54) **PROCÉDÉ DE TRAITEMENT THERMIQUE DE MATÉRIAUX PULVÉRULENTS**
VERFAHREN ZUR WÄRMEBEHANDLUNG PULVERFÖRMIGER MATERIALIEN
METHOD FOR THE THERMAL TREATMENT OF POWDERY MATERIALS

(30) Priorité: 21.12.2006 FR 0655793
(43) Date de publication de la demande: 23.09.2009
(73) Titulaire: Revtech, 26270 Loriol sur Drome (FR)
(72) Inventeur: MITZKAT, Martin, 26270 Cliousclat (FR)
(74) Mandataire: Domange, Maxime
(86) Numéro de dépôt international: PCT/FR2007/052144
(87) Numéro de publication internationale: WO 2008/081123

(56) Documents cités:
- WO-A-94/23549
- JP-A- 6 003 050
- JP-A- 61 216 728
- US-A- 5 974 076

## Description

La présente invention concerne un procédé de traitement thermique, et plus particulièrement de chauffage, de produits et matériaux pulvérulents et de poudres employés dans l'industrie, en particulier dans les industries chimiques, et le bâtiment par exemple.

Le réchauffage en continu de produits pulvérulents dans l'industrie est un domaine très large dominé par des équipements mécaniques encombrants tels que fours rotatifs et lits fluidisés qui utilise une action externe (rotation, vibration) pour faire avancer et pour brasser des particules des poudres lors de leur monté en température. Il existe également des techniques d'avancement mécanique qui agissent directement sur le produit tel que vis d'Archimède ou fours à bande. Les sources de chauffage dans pratiquement tous ces cas sont des combustibles fossiles tels que le fioul lourd ou le gaz naturel.

Dans le document JP06003050, on décrit le séchage d'un matériau pulvérulent en le faisant passer à travers un tube en quartz disposé verticalement, ledit tube étant disposé à l'intérieur d'un four chauffant.

Le chauffage de produits pulvérulents est plus difficile que le chauffage de liquides car il faut brasser ces produits lors de leur monté en température afin de réduire leur temps de chauffage. Un appareil typique pour réaliser cette opération est un four rotatif qui brasse le lit de produit par la rotation du cylindre. Un lit fluidisé obtient le même résultat en passant un courant d'air à travers le produit afin de le rendre fluide et pour améliorer ainsi ses coefficients d'échange interne de chaleur. Des systèmes vibrants permettent de fluidiser un produit pulvérulent, mais avec des coefficients d'échange globaux qui se situe entre les fours rotatifs et les lits aéro-fluidisés.

Les températures obtenues avec les fours rotatifs peuvent être élevées si l'intérieur du cylindre est revêtu de matériaux adéquats de type briques réfractaires. Mais dans ce cas l'appareil devient très lourd et encombrant car le cylindre qui est en rotation ne doit pas céder sous l'effet du poids ni de la température. Un exemple typique de ces fours est un four de cimenterie.

Un lit fluidisé peut être utilisé pour obtenir des hautes températures, au niveau même de la combustion comme dans le l'exemple d'un brûleur à lit fluidisé dans une centrale électrique où le produit à chauffer est le combustible lui-même

Ces dispositifs sont encombrants et nécessitent un deuxième système capable de fournir l'énergie nécessaire pour le chauffage du produit, soit sous forme d'un générateur d'air chaud, soit des brûleurs en contact direct avec le produit ou la surface chauffante. Le rendement est souvent faible car de grosses quantités d'air sont mises en jeu et rejetées après le traitement. Des investissements supplémentaires sont nécessaires pour récupérer cette chaleur (échangeurs haut température etc.)

Le but de l'invention est d'obtenir des procédé et dispositif améliorés capables de permettre le traitement de tout type de matériaux pulvérulents et poudres, même les plus fins à des températures allant jusqu'à 1600°C à 2000°C sans les inconvénients des systèmes de chauffages traditionnels évoqués ci-avant.

Ce but est atteint selon un premier aspect de l'invention grâce à un procédé de traitement thermique de produits pulvérulents, en particulier de poudres, caractérisé en ce que l'on chauffe lesdits produits, notamment jusqu'à une température d'au moins 700 °C, dans un tube à passage de courant disposé de façon inclinée par rapport à un plan horizontal, et de préférence sensiblement verticalement par rapport à ce plan, lesdits produits s'écoulant dans ledit tube essentiellement par gravité, et dans lequel on chauffe lesdits produits dans ledit tube (5) par chauffage des parois du tube par effet Joule, ledit tube étant relié et alimenté directement par un dispositif d'alimentation électrique (6) permettant d'échauffer les parois dudit tube par effet Joule.

On comprend que le chauffage des produits se fait donc essentiellement par rayonnement et, le cas échéant, par contact avec la paroi dans le cas d'un tube incliné.

Le procédé de l'invention est donc basé sur l'utilisation du tube à passage de courant statique qui permet de chauffer les parois du tube par le passage d'un courant électrique adapté encore dénommé "impedance heating tube". La température obtenue sur le tube dépend de la quantité de courant qui parcourt le tube et la nuance de l'alliage utilisé.

Dans le document WO 94/23549, on décrit un tube à passage de courant électrique utilisé pour le chauffage d'un fluide.

Selon le procédé de l'invention, on chauffe lesdits produits dans ledit tube jusqu'à une température d'au plus 2000°C, et de préférence une température comprise entre 150°C et 1500°C, notamment entre 800°C et 1200°C. Le tube est placé verticalement ou de façon inclinée et la poudre est versée simplement au débit souhaité. Par l'action de la pesanteur le produit ressort en bas du tube après avoir été chauffé très fortement.

Le procédé de traitement thermique selon l'invention est particulièrement avantageux au regard des procédés connus de l'état de la technique. En effet, il permet d'atteindre des températures de traitement des poudres très élevées, ce qui permet de réduire considérablement les temps de traitements (de chauffage) de quelques dizaines de minutes dans les fours tournants ou vibrants à quelques secondes avec le procédé de l'invention.

De plus, ce nouveau procédé permet de traiter n'importe quelle poudres et produits pulvérulents en s'affranchissant des problèmes habituels de collage et d'effet de peau rencontrés avec les poudres de très faibles granulométrie, c'est-à-dire inférieures à 10µm et ce avec des débits de traitements et un rendement énergétique élevés, dans un encombrement réduit en raison de la simplicité du dispositif de traitement à mettre en oeuvre.

La présente invention permet d'obtenir un chauffage mieux contrôlé et, le cas échéant, plus homogène entre les différentes parties de la surface du tube, et donc d'obtenir des produits chauffés de façon plus homogène et uniforme à l'intérieur du tube et, notamment, plus rapidement, avec un rendement énergétique optimale.

En particulier, la présente invention permet d'éviter des points de surchauffe du tube, notamment dans le cas de produits traités thermosensibles et/ou très fins, notamment de taille inférieure à 200 µm, qui pourraient être dégradés localement. Ce chauffage homogène de la surface du tube permet également d'éviter des problèmes de tenue mécanique du tube, en évitant les risques de fonte localisée.

Selon le type de produit traité et les caractéristiques du tube à passage de courant utilisé pour mettre en oeuvre le procédé, la puissance électrique d'alimentation dudit tube est comprise entre 10 kilowatts (kW) et 5 mégawatts (MW).

De façon avantageuse, on peut également réguler la température desdits produits traités à l'intérieur dudit tube par régulation de la puissance électrique d'alimentation dudit tube.

Dans un mode de réalisation, on chauffe uniformément le tube sur toute la longueur et sur toute sa périphérie.

Toutefois, dans un mode de réalisation avantageux, on chauffe l'extrémité supérieure de la paroi du tube, de préférence sur une longueur inférieure ou égale à un tiers de la longueur totale du tube chauffé, à une température plus élevée que le reste du tube, c'est-à-dire la partie inférieure restante du tube, chauffé uniformément.

Ainsi, le produit introduit en haut du tube est porté plus rapidement à la température recherchée.

Le dispositif d'introduction comprenant une vis d'alimentation est avantageux car il permet de contrôler précisément le débit d'alimentation du produit quelque soit le débit de gaz mis en oeuvre.

Avantageusement, on fait circuler, en particulier si le tube est incliné, un gaz à co-courant ou à contre-courant desdits produits traités dans ledit tube au cours du chauffage desdits produits.

Conformément au procédé de l'invention, le débit desdits produits traités à l'intérieur dudit tube à passage de courant est compris entre 0,01 tonnes/heure et 10 tonnes/heures, en fonction de la nature des produits traités et de la température de chauffage desdits produits souhaitée, et le temps de séjour moyen des produits dans le tube est compris entre 0,5 seconde et 2 minutes.

Un autre aspect de l'invention consiste à fournir un dispositif pour la mise en oeuvre du procédé de l'invention, ce dispositif comportant un dit tube à passage de courant disposé de façon inclinée par rapport à un plan horizontal, et de préférence sensiblement verticalement par rapport à ce plan, un dispositif d'alimentation électrique dudit tube relié audit tube permettant d'en chauffer les parois par effet Joule, et un dispositif d'injection de dits matériaux pulvérulents dans ledit tube agencé de façon à ce que lesdits produits introduits dans ledit tube par ledit dispositif d'injection s'écoulent dans ledit tube essentiellement par gravité.

Un tel dispositif est particulièrement avantageux car il présente une occupation au sol négligeable par rapport aux fours rotatifs utilisés dans l'état de la technique, ainsi qu'un coût d'investissement très inférieur, sans compter une facilité de mise en oeuvre particulièrement importante.

Dans un mode de réalisation, ledit tube à passage de courant est incliné d'un angle α compris entre 30° et 90° par rapport audit plan horizontal (P).

La mise en oeuvre d'un tube incliné permet de réduire la hauteur totale du dispositif, mais surtout de rallonger le temps de séjour des produits dans le tube, car ceux-ci sont en contact avec la surface intérieure de la paroi du tube et roulent sur celle-ci, au lieu de tomber directement dans le vide à l'intérieur d'un tube vertical. Ce mode de réalisation avec tube incliné est approprié pour des produits pulvérulents présentant une rhéologie permettant une coulabilité suffisante du produit sur la paroi.

Conformément à une autre caractéristique de l'invention, lesdits produits sont introduits dans ledit tube par l'intermédiaire d'un dispositif d'injection comprenant une vanne alvéolaire ou une vis d'alimentation en aval d'une trémie d'alimentation, et des moyens d'injection de gaz à l'extrémité supérieure du tube et/ou entre la vanne ou dite vis d'alimentation et ledit tube.

Des caractéristiques préférées de ce dispositif résident notamment dans le fait que:
- il comporte des moyens d'injection de gaz à l'intérieur dudit tube de manière à faire circuler un dit gaz à co-courant ou à contre-courant des produits injectés dans ledit tube par ledit dispositif d'injection.
- il comporte des moyens de régulations de la puissance électrique délivrée par ledit dispositif d'alimentation au dit tube.

En outre, de préférence, ledit tube à passage de courant est relié audit dispositif d'alimentation électrique en une pluralité de points de raccordement répartis sur toute la longueur dudit tube, et de façon à chauffer sensiblement uniformément toute la paroi du tube.

Dans un mode de réalisation avantageux, le dispositif d'alimentation électrique comprend un transformateur basse tension, de préférence à une tension inférieure à 100 V, de préférence encore 48 V, ledit tube étant relié audit transformateur par au moins 2 câbles de raccordement.

Pour un courant mono ou biphasé, on utilise 2 ou 3 câbles de raccordement. Pour un courant triphasé on utilise 4 câbles de raccordement correspondant aux 3 phases du courant électrique et au fil de masse.

En général, les points de raccordement sont uniformément répartis sur la longueur du tube à chauffer, c'est-à-dire répartis à distance égale les uns des autres successivement.

Toutefois, avantageusement encore, la distance entre les deux premiers points de raccordement, dans la partie supérieure du tube, est plus petite que celle entre les autres points de raccordement répartis sensiblement à équidistance les uns à la suite des autres sur le reste de la longueur du tube chauffé, de préférence une distance entre lesdits deux premiers points de raccordement d'une longueur de 10 à 30% plus petite que la distance de répartition uniforme des autres points de raccordement, et l'épaisseur dudit tube entre les deux dits premiers points de raccordement est inférieure à l'épaisseur du reste du tube, de préférence correspondant à une réduction d'épaisseur de 10 à 30% par rapport à celle du reste du tube.

Ceci permet de chauffer davantage la partie supérieure du tube, entre les deux premiers points de raccordement, et donc de chauffer plus rapidement le produit introduit dans le tube en haut du tube. La diminution d'épaisseur du tube permet de conserver des résistances électriques identiques entre les différents points de raccordement pour ne pas déséquilibrer les phases du courant d'alimentation. Le chauffage à une température plus élevée de la partie supérieure du tube provient du fait que la même puissance électrique est délivrée sur une portion de tube de longueur réduite par rapport aux autres portions de tube entre les autres points de raccordement sensiblement équidistants les uns à la suite des autres.

On obtient de la sorte un procédé et un système de chauffage très puissants (jusqu'à plusieurs mégawatts d'énergie électrique injectée) pour un encombrement très faible et avec une très grande simplicité de mise en oeuvre grâce à l'absence de tout système mécanique et thermique. Tout type de produit pulvérulent homogène et non colmatant peut être traité.

Le tube est constitué d'un matériau conducteur d'électricité. Selon une caractéristique préférée du dispositif de l'invention, ledit tube à passage de courant est constitué d'un matériau métallique amagnétique tel qu'un alliage non magnétique d'acier, de préférence de l'acier inoxydable austénitique, ou des alliages de nickel, chrome, fer, aluminium, par exemple l'inconel ou le monel. En variante, pour atteindre notamment de très hautes températures, le tube peut être constitué de céramiques conductrices, par exemple à base de carbure de silicium, ou encore le tube peut être constitué d'un matériau à base de carbone sous forme cristalline conductrice, telle que sous forme graphite.

Avantageusement, pour que le procédé de l'invention puisse facilement être mis en oeuvre, ledit tube à passage de courant présente en outre une longueur comprise entre 2 et 50 m, de préférence 5 à 30 m, et un diamètre compris entre 20 et 220 mm, et une épaisseur de paroi de 2 à 10 mm.

D'autres caractéristiques de la présente invention ressortiront mieux à la lecture de la description détaillée qui suit, faite à titre non limitatif en référence à la figure unique annexée, représentant un dispositif de chauffage de produits pulvérulents permettant la mise en oeuvre du procédé de l'invention dans un mode préféré de réalisation.

Ce dispositif comporte un tube à passage de courant 5 de préférence suspendu ou soutenu par des étais pour être installé avec un angle α compris entre 30°C et 90° (vertical) par rapport à un plan P horizontal correspondant au sol ou plus généralement au plan d'édification du dispositif. Lorsque, comme dans l'exemple représenté, le tube 5 est disposé totalement vertical par rapport au plan P, cela facilite l'écoulement du produit traité dans le tube jusqu'à la sortie 7 de celui-ci et permet d'obtenir de très bons débits de traitement, l'avantage d'une disposition plus inclinée, jusqu'à par exemple un angle de 30° étant la réduction de la hauteur totale du dispositif.

Le tube à passage de courant 5 est raccordé électriquement par des lignes 61 à un dispositif d'alimentation électrique 6 capable de délivrer une tension d'alimentation comprise entre 1 V et 500 V. En général, les lignes 61 sont raccordées de façon régulière sur toute la longueur du tube 5 afin d'obtenir une distribution homogène d'énergie électrique dans le tube 5 et un échauffement uniforme des parois de celui-ci par effet Joule, la puissance électrique injectée dans le tube par le dispositif d'alimentation 6 pouvant varier entre 10 kW et 5 MW en fonction de la longueur et de la résistivité du tube 5.

Des régulateurs de puissance (non représentés) permettent de moduler la quantité d'énergie injectée dans le tube 5, et de réguler la température d'échauffement de celui-ci, laquelle peut être portée jusqu'à 1600°C à 2000°C selon la nature du tube 5.

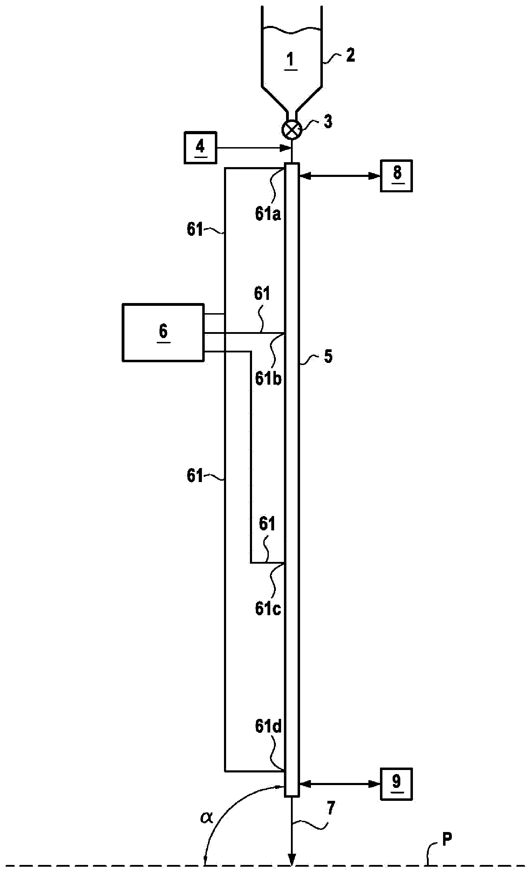

Dans un mode de réalisation, le dispositif d'alimentation électrique comprend un transformateur basse tension alimenté par un courant triphasé de 48 V. Le transformateur est relié au tube par 4 câbles de raccordement 61, correspondant aux 3 phases et à la masse. Pour chauffer davantage la partie supérieure du tube, afin de chauffer plus rapidement le produit, sur la figure 1 on a raccourcit la distance entre les deux premiers points de raccordement 61a et 61b, les autres points de raccordement 61c et 61d étant répartis régulièrement, c'est-à-dire que les distances entre les points 61b-61c et 61c et 61d sont identiques mais plus grandes que celles entre 61a-61b.

Pour pouvoir délivrer une même puissance électrique sur une portion de tube réduite, tout en conservant la même résistance électrique afin de conserver l'équilibrage entre les phases, c'est-à-dire pour conserver la même résistance électrique entre les différents points de raccordement successifs, on réduit l'épaisseur de ladite partie supérieure entre les deux premiers points de raccordement 61a et 61b, dans une même proportion que la réduction de distance.

La régulation de la température du tube est réalisée par la modulation de la puissance électrique injectée dans les parois du tube. Le transformateur est piloté par un gradateur de puissance utilisant des thyristors fonctionnant en mode trains d'ondes rapides. On peut ainsi moduler la puissance injectée par des impulsions marche/arrêt tous les 10 à 40 cycles, par exemple. Une boucle de régulation composée d'une sonde thermocouple et d'un régulateur de type PID, reliés audit gradateur. La sonde thermocouple peut être placée soit dans le flux de produit ou, plus généralement, sur la paroi du tube. Ce type de régulation permet de régler précisément, à +/- 1°C, la température du tube car l'inertie thermique de l'installation est très faible.

Le tube 5 est de préférence réalisé d'un alliage métallique amagnétique pour éviter l'effet de peau, où la concentration de courant sur la surface extérieure du tube, un phénomène particulièrement perturbant avec les très forts courants injectés dans le tube. De façon la plus simple, le tube à passage de courant 5 est constitué d'acier inoxydable dans un diamètre couramment disponible. Ce diamètre est pratiquement choisi en fonction du produit traité, du débit souhaité et du temps de séjour dans le tube.

Le procédé et le dispositif de traitement thermique de l'invention permettant de traiter, selon les premiers essais réalisés, tout type de produit pulvérulent et de poudres à des débits compris entre 10 kg/h et 10 T/h, les diamètres de tube 5 utilisés peuvent varier entre 20 mm et 220 mm pour des longueurs de tubes comprises entre 10 m à 50 m et d'épaisseur 2 à 6 mm.

A titre d'exemple, on peut employer un tube DN50 (Øext 60,3 x 2,9 mm d'épaisseur) pour le chauffage d'une poudre d'oxyde de zinc de masse volumique µ=1200 kg/m³ à un débit de 1 T/h, ou un tube DN65 (Øext 76 x 2,9 mm d'épaisseur) pour le chauffage d'une poudre d'oxyde de nickel de masse volumique µ=450 kg/m³ à un débit de 1,5 T/h.

A l'extrémité supérieure du tube 5 est situé une trémie 2 de réception du produit à traiter 1 et un dispositif d'injection dudit produit 1 dans le tube 5 comportant vanne alvéolaire 3 combinée à des premiers moyens d'injection de gaz froid 4 entre ladite vanne 3 et l'entrée du tube 5. Ce gaz peut être un gaz réactif, de l'air comprimé, ou un gaz inerte et permet d'isoler thermiquement et de protéger la vanne alvéolaire contre la chaleur dégagée par la température élevée du tube 5 en fonctionnement.

Dans une variante d'utilisation, la vanne alvéolaire 3 est remplacée par une vis d'alimentation.

De façon complémentaire, il est également possible de prévoir, comme représenté sur la figure, des seconds moyens d'injection et/ou d'aspiration de gaz 8, 9 au niveau de l'extrémité supérieure et/ou, respectivement, de l'extrémité inférieure du tube 5 de manière à injecter et faire circuler un dit gaz, qui peut être identique au gaz de refroidissement, à contre-courant ou, de préférence, à co-courant du produit traité dans le tube.

Une telle circulation de gaz à co- ou contre-courant permet plusieurs possibilités telles que l'évacuation d'effluents gazeux, l'inertage du dispositif ou la mise en contact avec un gaz réactif.

Un exemple de traitement thermique susceptible d'être mené à bien conformément au procédé de l'invention concerne le frittage d'oxydes métalliques tels que l'oxyde de nickel.

Ce produit se présente sous forme d'une poudre dont la densité est de l'ordre de 0,3 kg/l avec une taille de particules d'environ 5µm. La surface spécifique mesurée de ces poudres est de l'ordre de 20m²/g.

Or leur utilisation dans l'industrie, notamment pour des opérations de revêtement, nécessite une réduction de la surface spécifique à environ 5m²/g et une réduction de la masse volumique à environ 0,45 kg/l.

Pour obtenir ce résultat, la poudre doit être chauffée à une température supérieure à 800°C pendant une courte durée de temps.

Ce chauffage peut être réalisé conformément au procédé de l'invention dans un tube à passage de courant vertical 5 tel que représenté sur la figure unique ci-jointe par exemple constitué d'Inconel avec un diamètre de 60 mm pour une longueur de 12 m.

La poudre d'oxyde de nickel est introduite dans le tube 5, disposé verticalement, à un débit de 200 kg/h et est chauffé à une température de l'ordre de 1000°C atteinte de façon très rapide, c'est-à-dire avec un temps de séjour de quelques secondes à l'intérieur du tube 5, et en pratique inférieur à 10 secondes.

Durant la circulation des poudres dans le tube 5, un faible co-courant d'azote permet de dégager les effluents gazeux dégagés par le chauffage des poudres, sans perturber le fonctionnement global du dispositif.

A la sortie 7 du tube de chauffage on récupère les poudres d'oxyde de nickel après chauffage avec une surface spécifique et une masse volumique satisfaisantes pour leur utilisation.

## Revendications

1. Procédé de traitement thermique de produits pulvérulents (1), en particuliers de poudres, **caractérisé en ce que** l'on chauffe lesdits produits par circulation desdits produits dans un tube à passage de courant (5) disposé de façon inclinée par rapport à un plan horizontal (P), et de préférence sensiblement verticalement par rapport à ce plan, lesdits produits s'écoulant dans ledit tube essentiellement par gravité, et dans lequel on chauffe lesdits produits dans ledit tube (5) par chauffage des parois du tube par effet Joule, ledit tube étant relié et alimenté directement par un dispositif d'alimentation électrique (6) permettant d'échauffer les parois dudit tube par effet Joule.

2. Procédé selon la revendication 1, dans lequel on chauffe lesdits produits (1) dans ledit tube (5) jusqu'à une température d'au plus 2 000°C, et de préférence une température comprise entre 150 et 1500°C.

3. Procédé selon l'une des revendications 1 ou 2, dans lequel ledit tube à passage de courant (5) est incliné d'un angle α compris entre 30° et 90° par rapport au dit plan horizontal (P).

4. Procédé selon la revendication 3, dans lequel la puissance électrique d'alimentation dudit tube (5) est comprise entre 10 kilowatts et 5 mégawatts.

5. Procédé selon l'une des revendications 3 ou 4, dans lequel on régule la température desdits produits traités à l'intérieur dudit tube par régulation de la puissance électrique d'alimentation dudit tube.

6. Procédé selon l'une des revendications 1 à 5, **caractérisé en ce que** l'on chauffe l'extrémité supérieure de la paroi du tube à une température plus élevée que le reste du tube chauffé uniformément.

7. Procédé selon l'une des revendications 1 à 6, dans lequel on fait circuler un gaz à co-courant ou à contre-courant desdits produits traités dans ledit tube (5) au cours du chauffage desdits produits.

8. Procédé selon l'une des revendications 1 à 6, **caractérisé en ce que** lesdits produits pulvérulents présentent une granulométrie moyenne inférieure à 200 µm.

9. Dispositif pour la mise en oeuvre du procédé des revendications 1 à 8, comportant un dit tube à passage de courant (5) disposé de façon inclinée par rapport à un plan horizontal (P), et de préférence sensiblement verticalement par rapport à ce plan, un dit dispositif d'alimentation électrique (6) relié audit tube, permettant d'en chauffer les parois par effet Joule, et un dispositif d'injection de dits matériaux pulvérulents dans ledit tube agencé de façon à ce que lesdits produits introduits dans ledit tube par ledit dispositif d'injection s'écoulent dans ledit tube essentiellement par gravité.

10. Dispositif selon la revendication 9, dans lequel ledit tube à passage de courant (5) est incliné d'un angle α compris entre 30° et 90° par rapport au dit plan horizontal (P).

11. Dispositif selon la revendication 9 ou 10, dans lequel ledit tube à passage de courant (5) est relié audit dispositif d'alimentation électrique (6) en une pluralité de points de raccordement répartis sur toute la longueur dudit tube, et de façon à chauffer sensiblement uniformément toute la paroi du tube.

12. Dispositif selon l'une des revendications 9 à 11, **caractérisé en ce que** le dispositif d'alimentation électrique comprend un transformateur basse tension, de préférence à une tension inférieure à 100 V, de préférence encore 48 V, ledit tube étant relié audit transformateur par au moins 2 câbles de raccordement (61).

13. Dispositif selon la revendication 12, **caractérisé en ce que** le tube est alimenté en courant électrique triphasé, ledit tube étant relié audit transformateur par 4 câbles de raccordement (61).

14. Dispositif selon l'une des revendications 12 ou 13, **caractérisé en ce que** la distance entre les deux premiers points (61a, 61b) de raccordement, dans la partie supérieure du tube, est plus petite que celle entre les autres points de raccordement (61c, 61d) répartis sensiblement à équidistance les uns à la suite des autres sur le reste de la longueur du tube chauffé, de préférence une distance entre lesdits deux premiers points de raccordement d'une longueur de 10 à 30% plus petite que la distance entre les autres points de raccordement successifs équidistants, et l'épaisseur dudit tube entre les deux dits premiers points de raccordement est inférieure à l'épaisseur du reste du tube, de préférence correspondant à une réduction d'épaisseur de 10 à 30% par rapport à celle du reste du tube.

15. Dispositif selon l'une des revendications 9 à 14, dans lequel ledit dispositif d'injection comporte une vanne alvéolaire (3) ou une vis d'alimentation en aval d'une trémie d'alimentation (2), et des moyens (8, 4) d'injection de gaz à l'extrémité supérieure du tube et/ou entre ladite vanne ou dite vis d'alimentation et ledit tube.

16. Dispositif selon l'une des revendications 9 à 15, comportant en outre des moyens d'injection de gaz à l'intérieur dudit tube de manière à faire circuler un dit gaz à co-courant ou à contre-courant des produits injectés dans ledit tube par ledit dispositif d'injection.

17. Dispositif selon l'une des revendications 9 à 16, **caractérisé en ce que** le matériau constitutif dudit tube est un alliage non magnétique d'acier, du carbure de silicium ou du carbone sous forme graphite.

18. Dispositif selon l'une des revendications 9 à 17; dans lequel ledit tube à passage de courant présente une longueur comprise entre 2 et 50 m, de préférence 5 à 30 m.

19. Dispositif selon l'une des revendications 9 à 18, dans lequel ledit tube à passage de courant présente un diamètre compris entre 20 et 220 mm et une épaisseur de paroi de 2 à 10 mm.

## Patentansprüche

1. Verfahren zur Wärmebehandlung von pulverförmigen Produkten (1), insbesondere Pulvern, **dadurch gekennzeichnet, dass** die Produkte durch Zirkulation der Produkte in einer Stromröhre (5), die geneigt in Bezug zu einer Horizontalebene (P) und vorzugsweise vertikal zu dieser Ebene angeordnet ist, erwärmt werden, wobei die Produkte in der Röhre im Wesentlichen durch Schwerkraft abfließen, und bei dem die Produkte in der Röhre (5) zur Erwärmung der Wände der Röhre durch Joule'schen Effekt erwärmt werden, wobei die Röhre direkt mit einer elektrischen Versorgungseinrichtung (6), die es ermöglicht, die Wände der Röhre durch Joule'schen Effekt zu erwärmen, verbunden ist und von dieser versorgt wird.

2. Verfahren gemäß Anspruch 1, bei dem die Produkte (1) in der Röhre (5) auf eine Temperatur von höchstens 2000 °C und vorzugsweise eine Temperatur zwischen 150 und 1500 °C erwärmt werden.

3. Verfahren gemäß einem der Ansprüche 1 oder 2, bei dem die Stromröhre (5) um einen Winkel α zwischen 30° und 90° zur Horizontalebene (P) geneigt ist.

4. Verfahren gemäß Anspruch 3, bei dem die elektrische Versorgungsleistung der Röhre (5) zwischen 10 Kilowatt und 5 Megawatt liegt.

5. Verfahren gemäß einem der Ansprüche 3 oder 4, bei dem die Temperatur der in der Röhre behandelten Produkte durch Regelung der elektrischen Versorgungsleistung der Röhre geregelt wird.

6. Verfahren gemäß einem der Ansprüche 1 bis 5, **dadurch gekennzeichnet, dass** das obere Ende der Wand der Röhre auf eine höhere Temperatur als der Rest der einheitlich erwärmten Röhre erwärmt wird.

7. Verfahren gemäß einem der Ansprüche 1 bis 6, bei dem ein Gas im Gleichstrom oder im Gegenstrom der in der Röhre behandelten Produkte (5) während der Erwärmung der Produkte zum Zirkulieren gebracht wird.

8. Verfahren gemäß einem der Ansprüche 1 bis 6, **dadurch gekennzeichnet, dass** die pulverförmigen Produkte eine durchschnittliche Korngröße von weniger als 200 µm aufweisen.

9. Vorrichtung für den Einsatz des Verfahrens der Ansprüche 1 bis 8, umfassend eine Stromröhre (5), die geneigt in Bezug zu einer Horizontalebene (P) und vorzugsweise im Wesentlichen vertikal zu dieser Ebene angeordnet ist, eine elektrische Versorgungseinrichtung (6), die mit der Röhre verbunden ist, die es ermöglicht, deren Wände durch Joule'schen Effekt zu erwärmen, und eine Einspritzvorrichtung der pulverförmigen Materialien in die Röhre, die dazu vorgesehen ist, dass die in die Föhre durch die Einspritzvorrichtung eingeleiteten Produkte im Wesentlichen durch Schwerkraft abfließen.

10. Vorrichtung gemäß Anspruch 9, bei der die Stromröhre (5) um einen Winkel α zwischen 30° und 90° zur Horizontalebene (P) geneigt ist.

11. Vorrichtung gemäß Anspruch 9 oder 10, bei der die Stromröhre (5) mit der elektrischen Versorgungseinrichtung (6) an einer Vielzahl von Anschlusspunkten verbunden ist, die über die gesamte Länge der Röhre verteilt sind, um die gesamte Wand der Röhre im Wesentlichen einheitlich zu erwärmen.

12. Vorrichtung gemäß einem der Ansprüche 9 bis 11, **dadurch gekennzeichnet, dass** die elektrische Versorgungseinrichtung einen Niederspannungstransformator, vorzugsweise mit einer Spannung unter 100 V, ferner vorzugsweise 48 V, wobei die Röhre mit dem Transformator durch mindestens 2 Anschlusskabel (61) verbunden ist.

13. Vorrichtung gemäß Anspruch 12, **dadurch gekennzeichnet, dass** die Röhre mit elektrischem Dreiphasenstrom versorgt wird, wobei die Röhre mit dem Transformator durch 4 Anschlusskabel (61) verbunden ist.

14. Vorrichtung gemäß einem der Ansprüche 12 oder 13, **dadurch gekennzeichnet, dass** der Abstand zwischen den beiden ersten Anschlusspunkten (61 a, 61 b) in dem oberen Teil der Röhre kleiner als jener zwischen den anderen Anschlusspunkten (61 c, 61 d) ist, die im Wesentlichen in gleichem Abstand nacheinander auf der restlichen Länge der erwärmten Röhre verteilt sind, vorzugsweise ein Abstand zwischen den beiden ersten Anschlusspunkten mit einer um 10 bis 30 % kleineren Länge als der Abstand zwischen den anderen aufeinanderfolgenden gleich beabstandeten Anschlusspunkten, und dass die Dicke der Röhre zwischen den beiden ersten Anschlusspunkten kleiner als die Dicke der restlichen Röhre ist, vorzugsweise entsprechend einer Dickenverringerung um 10 bis 30 % im Vergleich mit jener der restlichen Röhre.

15. Vorrichtung gemäß einem der Ansprüche 9 bis 14, bei der die Einspritzvorrichtung ein wabenförmiges Ventil (3) oder eine Versorgungsschnecke stromabwärts zu einem Versorgungstrichter (2) und Gaseinspritzmittel (8, 4) am oberen Ende der Röhre und/oder zwischen dem Ventil oder der Versorgungsschnecke und der Röhre umfasst.

16. Vorrichtung gemäß einem der Ansprüche 9 bis 15, ferner umfassend Mittel zum Einspritzen von Gas in das Innere der Röhre, um ein Gas im Gleichstrom oder im Gegenstrom der in die Röhre durch die Einspritzvorrichtung eingespritzten Produkte zirkulieren zu lassen.

17. Vorrichtung gemäß einem der Ansprüche 9 bis 16, **dadurch gekennzeichnet, dass** das Material, aus dem die Röhre besteht, eine nicht magnetische Legierung aus Stahl, Siliziumkarbid oder Kohlenstoff in Form von Graphit ist.

18. Vorrichtung gemäß einem der Ansprüche 9 bis 17, bei der die Stromröhre eine Länge zwischen 2 und 50 mm, vorzugsweise 5 bis 30 m, aufweist.

19. Vorrichtung gemäß einem der Ansprüche 9 bis 18, bei der die Stromröhre einen Durchmesser zwischen 20 und 220 mm und eine Wandstärke von 2 bis 10 mm aufweist.

## Claims

1. A method for heat treatment of powdery products (1), in particular of powders, **characterized in that** said products are heated by the flow of said products in a passage tube (5) for current, positioned tilted with respect to a horizontal plane (P), and preferably substantially vertically with respect to this plane, said products flowing into said tube essentially by gravity, and wherein said products are heated in said tube (5) by heating the walls of the tube by the Joule effect, said tube being connected and directly powered by an electric power supply device (6) with which the walls of said tube may be heated by the Joule effect.

2. The method according to claim 1, wherein said products (1) are heated in said tube (5) right up to a temperature of at most 2,000°C, and preferably to a temperature comprised between 150 and 1,500°C.

3. The method according to any of claims 1 or 2, wherein said passage tube (5) for current is tilted by an angle α comprised between 30° and 90° with respect to said horizontal plane (P).

4. The method according to claim 3, wherein the electric power supplied to said tube (5) is comprised between 10 kilowatts and 5 megawatts.

5. The method according to any of claims 3 or 4, wherein the temperature of said products treated inside said tube is controlled by regulating the electric power supplied to said tube.

6. The method according to any of claims 1 to 5, **characterized in that** the upper end of the wall of the tube is heated to a higher temperature than that of the uniformly heated remainder of the tube.

7. The method according to any of claims 1 to 6, wherein a gas is caused to flow with the current or against the current of said products treated in said tube (5) during the heating of said products.

8. The method according to any of claims 1 to 6, **characterized in that** said powdery products have an average particle size less than 200 µm.

9. A device for applying the method of claims 1 to 8, including a so-called passage tube (5) for current, positioned tilted with respect to a horizontal plane (P) and preferably substantially vertically with respect to this plane, a so-called electric power supply device (6) connected to said tube, allowing the walls to be heated by the Joule effect, and a device for injecting said powdery materials into said tube laid out so that said products introduced into said tube by said injection device flow into said tube essentially by gravity.

10. The device according to claim 9, wherein said passage tube (5) for current is tilted by an angle α comprised between 30° and 90° with respect to said horizontal plane (P).

11. The device according to claims 9 or 10, wherein said passage tube (5) for current is connected to said electric power supply device (6) at a plurality of connection points distributed throughout the length of said tube so as to heat the whole wall of the tube substantially uniformly.

12. The device according to any of claims 9 to 11, **characterized in that** the electric power supply device comprises a low voltage transformer, preferably at a voltage less than 100 V, still preferably 48 V, said tube being connected to said transformer through at least 2 connection cables (61).

13. The device according to claim 12, **characterized in that** the tube is powered with an electrical three-phase current, said tube being connected to said transformer through 4 connecting cables (61).

14. The device according to any of claims 12 or 13, **characterized in that** the distance between the first two connection points (61a, 61b), in the upper portion of the tube is smaller than that between the other connection points (61c, 61d) substantially distributed equidistantly from each other in succession over the remainder of the length of the heated tube, preferably a distance between said first two connection points with a 10 to 30% smaller length than the distance between the other equidistant successive connection points, and the thickness of said tube between both said first connection points is less than the thickness of the remainder of the tube, preferably corresponding to a 10 to 30% reduction in thickness relatively to that of the remainder of the tube.

15. The device according to any of claims 9 to 14, wherein said injection device includes a honeycomb valve (3) or a feed screw downstream from a feed hopper (2) and means (8, 4) for injecting gas at the upper end of the tube and/or between said valve or said feed screw and said tube.

16. The device according to any of claims 9 to 15, further including means for injecting gas inside said tube so as to cause said gas to flow with or against the current of the products injected into said tube by said injection device.

17. The device according to any of claims 9 to 16, **characterized in that** the constitutive material of said tube is a non-magnetic alloy of steel, silicon carbide or carbon as graphite.

18. The device according to any of claims 9 to 17, wherein said passage tube for current has a length comprised between 2 and 50 m, preferably 5 to 30 m.

19. The device according to any of claims 9 to 18, wherein said passage tube for current has a diameter comprised between 20 and 220 mm and a wall thickness from 2 to 10 mm.
